# FASCICULE DE BREVET EUROPEEN

(11) **EP 0 409 714 B1**
(45) Date de publication et mention de la délivrance du brevet: **14.04.1993**
(21) Numéro de dépôt: 90402046.8
(22) Date de dépôt: 16.07.1990
(51) Int. Cl.: F02B 37/12

(54) **Dispositif d'optimisation du fonctionnement d'un turbocompresseur de suralimentation d'un moteur à combustion**
Vorrichtung zur Betriebsoptimierung eines Turboladers von Brennkraftmaschinen
Turbocharger operation optimisation device for internal combustion engines

(30) Priorité: 19.07.1989 FR 8909725
(43) Date de publication de la demande: 23.01.1991
(73) Titulaire: AUTOMOBILES PEUGEOT, 75116 Paris (FR); AUTOMOBILES CITROEN, 92200 Neuilly-sur-Seine (FR)
(72) Inventeur: Tiphaine, Jean, F-78580 Maule (FR)
(74) Mandataire: Durand, Yves Armand Louis

(56) Documents cités:
- EP-A- 0 203 590
- DE-A- 3 246 483
- FR-A- 2 615 902
- GB-A- 2 034 402
- US-A- 2 559 623
- US-A- 3 257 796

## Description

La présente invention a essentiellement pour objet un dispositif d'optimisation du fonctionnement d'un turbo-compresseur de suralimentation d'un moteur à combustion équipé d'une turbine à géométrie variable.

Il a déjà été proposé d'équiper les véhicules automobiles de moteurs suralimentés par un turbo-compresseur, comportant un compresseur d'air entraîné par une turbine à géométrie variable elle-même entraînée par les gaz d'échappement du moteur et munie d'un ou plusieurs volets mobiles permettant de moduler la pression de l'air ou du mélange en sortie du compresseur en fonction des besoins du moteur.

Plus précisément, on a déjà proposé d'équiper les moteurs de véhicule d'une turbine à gaz d'échappement dont le stator comporte au moins un volet de réglage du débit d'admission des gaz d'échappement dans la turbine en fonction du régime du moteur, lequel volet est actionnable par une tringlerie commandée par la membrane d'une capsule manométrique reliée, en amont du papillon de commande des gaz, à une conduite comportant ce papillon et raccordant le compresseur à l'aspiration du moteur.

Dans ce système connu, le ou les volets équipants la turbine sont constamment rappelés en position fermée.

Certes, cette position est celle qui favorise un fonctionnement optimum aux bas régimes, mais en réduisant le débit de la turbine, elle peut placer cette turbine dans la partie instable de sa courbe caractéristique débit-pression, ce qui peut provoquer ce que l'on appelle un phénomène de "pompage". Et, en cas de défaillance de la régulation utilisée pour éviter ce phénomène, ou en cas de débranchement accidentel de la canalisation amenant la pression à la capsule manométrique, le volet reste en position fermée, quel que soit le régime du moteur, d'où un risque important de détérioration du turbo-compresseur, et notamment de l'axe unissant la turbine au compresseur.

Pour pallier cet inconvénient, on a déjà proposé des systèmes dans lesquels le ou les volets mobiles de la turbine ne permettent jamais d'atteindre la position complétement fermée, mais on se prive alors de la possibilité d'obtenir un fonctionnement optimal de la turbine.

Aussi, la présente invention a pour but de proposer un dispositif qui remédie à ces inconvénients.

A cet effet, l'invention a pour objet un dispositif d'optimisation du fonctionnement d'un turbo-compresseur de suralimentation d'un moteur à combustion, du type comprenant une turbine à gaz d'échappement dont le stator comporte au moins un volet de réglage du débit d'admission des gaz d'échappement dans la turbine en fonction du régime du moteur, lequel volet est actionnable par une tringlerie commandée par la membrane d'une capsule manométrique reliée, en amont du papillon de commande des gaz, à une conduite comportant ce papillon et raccordant le compresseur à l'aspiration du moteur, caractérisé par une deuxième capsule manométrique qui est reliée, en aval du papillon de commande des gaz, à ladite conduite comportant ce papillon et qui est montée en parallèle avec l'autre ou première capsule pour que sa membrane agisse sur la tringlerie commandée par cette première capsule, l'attelage de la tringlerie aux membranes des deux capsules étant tel que le volet est ouvert lorsque les capsules sont inactives et est constamment rappelé vers la position ouverte quel que soit le régime du moteur.

Suivant une autre caractéristique de ce dispositif la tringlerie est articulée sur deux tiges appartenant aux deux capsules manométriques dont les ressorts sont agencés en opposition.

On précisera encore ici que la deuxième capsule manométrique est reliée à la conduite raccordant le compresseur à l'aspiration du moteur par un conduit muni d'un clapet anti-retour et éventuellement d'un orifice de fuite calibré.

Mais d'autres caractéristiques et avantages de l'invention apparaîtront mieux dans la description détaillée qui suit et se réfère aux dessins annexés, donnés uniquement à titre d'exemple, et dans lesquels :
- la figure 1 est une vue schématique d'un dispositif conforme aux principes de l'invention et
- la figure 2 est une vue schématique des diverses positions que peut prendre la tringlerie pour un fonctionnement du moteur au ralenti, en charge moyenne et en pleine charge.

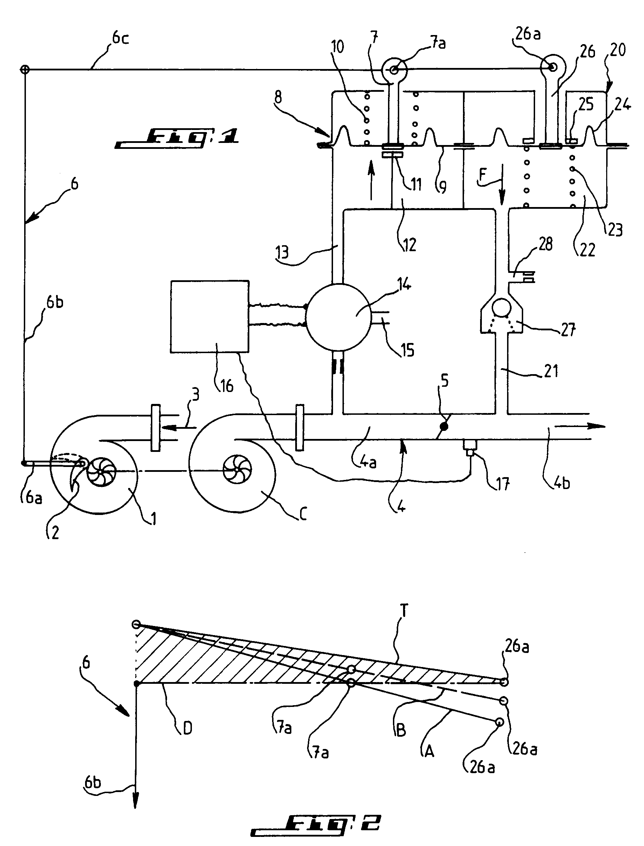

En se reportant à la figure 1, on voit une turbine 1 équipée d'au moins un volet 2 et alimentée en 3 par les gaz d'échappement du moteur (non représenté), cette turbine entraînant un compresseur C raccordé par une conduite 4 intérieurement munie d'un papillon 5 de commande des gaz et reliée à l'admission du moteur.

Le volet 2 est actionnable par une tringlerie 6 reliée de façon articulée à la tige 7 d'une première capsule manométrique 8 intérieurement munie, comme connu en soi, d'une membrane 9 solidaire de la tige. Cette membrane 9 est constamment sollicitée par un ressort 10 pour prendre appui sur une butée 11.

La capsule manométrique 8 comporte une chambre 12 communiquant par un conduit 13 avec la conduite 4. Comme on le voit bien sur la figure 1, le conduit 13 est relié à la conduite 4 en amont du papillon 5.

On a montré en 14 une électrovanne de contrôle à rapport cyclique d'ouverture variable, cette électrovanne étant interposée sur le conduit 13. L'électrovanne 14 peut communiquer avec l'atmosphère, comme on le voit en 15 et sera apte à fournir un débit proportionnel au rapport cyclique précité et déterminé par un calculateur 16 en fonction de divers paramètres relevés sur le moteur au moyen de capteurs, tel que celui visible en 17 sur la conduite 4 d'aspiration au moteur, en aval du papillon 5.

La tringlerie 6, comme connu en soi, peut être constituée par une pluralité de biellettes ou leviers articulés montrés schématiquement en 6a, 6b et 6c étant entendu que suivant l'exemple de réalisation représenté, la biellette ou levier 6c est articulé en 7a sur la tige 7.

Conformément à l'invention, une deuxième capsule manométrique 20 est reliée par un conduit 21, en aval du papillon de commande des gaz 5 à la conduite 4 comportant ce papillon.

Plus précisément, ce conduit 21 est relié à la chambre 22 de la capsule 20, cette chambre comprenant un ressort 23 sollicitant en permanence la membrane 24 contre une butée 25. A cette membrane 24 est attelée une tige 26 à laquelle est reliée de façon articulée en 26a la tige ou biellette 6c qui, comme on l'a vu précédemment est aussi articulée en 7a sur la tige 7 de l'autre capsule manométrique 8.

Comme on le voit sur la figure 1, les ressorts 10 et 23 des deux capsules 8 et 20 respectivement sont agencés en opposition pour qu'au repos du système, la tringlerie 6 maintienne le volet 2 de la turbine 1 en position ouverte. Dans cette position de repos, les membranes respectives des deux capsules 8 et 20 montées en parallèle prennent appui sur leurs butées respectives 11 et 25.

On a montré schématiquement en 27 un clapet anti-retour interposé sur le conduit 21, et en 28 un orifice de fuite calibré.

Mais, pour une meilleure compréhension de l'invention, on expliquera le fonctionnement du système qui vient d'être décrit et cela pour différents régimes du moteur, en s'aidant notamment du schéma visible sur la figure 2.

On partira de la position de repos ou inactive des deux capsules manométriques 8 et 20, position pour laquelle, comme on l'a dit précédemment, le volet 2 est en position ouverte.

En régime de ralenti du moteur, la pression qui règne dans la portion de conduite 4b en aval du papillon 5 est très inférieure à la pression atmosphérique et est bien entendu inférieure à la pression régnant dans la portion de conduite 4a en amont du papillon 5.

Il en résulte que, dans la capsule 20, et comme matérialisé par la flèche F, la membrane 24 de cette capsule se dégage de la butée 25 et comprime le ressort 23, de sorte que la tige 26 actionne le levier 6c qui pivote autour de l'axe 7a, ce qui va assurer la fermeture du volet 2 comme on le voit en traits pointillés sur la figure 1, de façon à optimiser ainsi les possibilités d'accélération à partir du ralenti.

En se reportant à la figure 2, on voit qu'en fonctionnement au ralenti, le levier 6c de la tringlerie 6 se trouve dans la position matérialisée par le trait A.

On observera ici que le clapet anti-retour 27 maintient la pression dans la chambre 22 de la deuxième capsule manométrique 20, tandis que l'orifice de fuite calibré 26 temporise ce maintien à une valeur convenable.

Pour un fonctionnement du moteur à charge moyenne, le papillon 5 est bien sûr plus ouvert qu'en régime de ralenti. Dès lors une communication plus importante s'établira entre les portions de conduite 4a et 4b, de sorte que la pression dans la portion de conduite 4b va remonter. La pression dans la portion de conduite 4a en amont du papillon 5 augmente elle aussi sous l'effet de la compression de l'air consécutive au fonctionnement du turbo-compresseur entraîné par les gaz d'échappement.

C'est dire que les tiges 7 et 26 des deux capsules manométriques remontent, l'une 7 se dégageant de la butée 11, et l'autre 26 tendant à appliquer la membrane 24 qui lui est attelée contre la butée 25. En d'autres termes, le levier 6c est soumis à l'action de deux forces agissant un peu comme un couple et, comme on le voit sur la figure 2, il prendra dans ce cas la position matérialisée par le trait en pointillés B.

C'est dire que le volet 2 de la turbine 1 est fermé, ce qui optimise là encore le temps de réponse du turbo-compresseur lors d'une accélération.

Pour un fonctionnement en pleine charge du moteur, c'est-à-dire pour une position très ouverte du papillon 5 de commande des gaz, les pressions régnant dans les deux portions de conduite 4a et 4b sont égales, et la pression dans la portion de conduite 4b atteint la valeur maximum que peut délivrer le turbo-compresseur.

Ceci signifie que l'axe 26a est immobile, puisque la membrane 24 de la capsule manométrique 20 prend appui sur la butée 25, de sorte que le levier 6c pourra pivoter autour de cet axe 26a, étant entendu que la position de l'axe 7a sera telle que le volet 2 sera maintenu en position fermée, comme illustré par le trait T sur la figure 2.

On comprend donc que le volet 2 étant au repos sollicité en position ouverte, sera, quel que soit le régime de fonctionnement du moteur, rappelé en position fermée par la tringlerie, étant bien entendu que l'électrovanne 14, pilotée par le calculateur 16, régulera l'ouverture dudit volet pour optimiser le fonctionnement de la turbine 1 et pour asservir le turbo-compresseur au régime du moteur. Les hachures sur la figure 2 illustrent d'ailleurs la zone d'action dans laquelle s'effectue la régulation, entre le trait mixte D correspondant à la position de repos ou ouverte du volet 2, et le trait T correspondant au fonctionnement en pleine charge du moteur.

On observera encore que la régulation par la vanne 14 se fait en appliquant à cette vanne de contrôle un courant haché fourni par le calculateur 16, ce qui met plus ou moins en communication la capsule manométrique 8 avec l'atmosphère. En bref c'est le rapport cyclique d'ouverture variable de cette vanne qui définira la pression moyenne agissant sur la membrane 9 de la capsule manométrique 8.

On insistera ici sur le fait que, en cas de défaillance de la vanne, ou plus généralement du système de régulation, ou en cas de débranchement accidentel d'un conduit amenant la pression à la capsule manométrique, la tringlerie 6 ramènera automatiquement le volet 2 à la position ouverte, et cela grâce au montage en parallèle précédemment décrit des deux capsules manométriques 8 et 20.

On a donc réalisé suivant l'invention un dispositif d'optimisation du fonctionnement d'un turbo-compresseur équipé d'une turbine à géométrie variable, qui permet une prédisposition optimale de la turbine relativement au temps de réponse du turbo-compresseur, et un pilotage fiable de la géométrie de la turbine, tout en conférant la sécurité mécanique voulue au turbo-compresseur et au moteur en cas de défaillance du circuit de régulation et de pilotage.

## Revendications

1. Dispositif d'optimisation du fonctionnement d'un turbo-compresseur de suralimentation d'un moteur à combustion, du type comprenant une turbine à gaz d'échappement (1) dont le stator comporte au moins un volet (2) de réglage du débit d'admission des gaz d'échappement dans la turbine en fonction du régime du moteur, lequel volet (2) est actionnable par une tringlerie (6) commandée par la membrane (9) d'une capsule manométrique (8) reliée, en amont du papillon (5) de commande des gaz, à une conduite (4) comportant ce papillon et raccordant le compresseur (C) à l'aspiration du moteur, ce dispositif comportant en outre une deuxième capsule manométrique (20) qui est reliée, en aval du papillon (5) de commande des gaz à ladite conduite (4) comportant ce papillon et qui est montée en parallèle avec l'autre ou première capsule (8) pour que sa membrane (24) agisse sur la tringlerie (6) commandée par cette première capsule (8), l'attelage de la tringlerie (6) aux membranes (9, 24) des deux capsules (8, 20) étant tel que le volet (2) est ouvert lorsque les capsules sont inactives.

2. Dispositif selon la revendication 1, caractérisé en ce que la tringlerie précitée (6) est articulée sur deux tiges (7, 26) appartenant respectivement aux deux capsules manométriques (8, 20) dont les ressorts (10, 23) sont agencés en opposition.

3. Dispositif selon la revendication 1 ou 2, caractérisé en ce que la deuxième capsule manométrique (20) est reliée à la conduite (4) raccordant le compresseur (C) à l'aspiration du moteur par un conduit (21) muni d'un clapet anti-retour (27) et éventuellement d'un orifice de fuite calibré (28).

## Patentansprüche

1. Vorrichtung zum Optimisieren des Betriebes eines Turboverdichters zur Aufladung eines Verbrennungsmotors, der eine Auspuffgasturbine (1) aufweisenden Gattung, deren Stator wenigstens eine Klappe (2) zur Regelung der Einlassmenge der Auspuffgase in die Turbine in Abhängigkeit der Motordrehzahl, welche Klappe (2) von einem durch die Membran (9) einer manometrischen Kapsel (8) gesteuerten Gestänge (6) betätigbar ist, welche Kapsel stromaufwärts der Drosselklappe (5) zur Steuerung der Gase mit einer diese Drosselklappe aufweisenden und den Verdichter (C) mit der Ansaugseite des Motors verbindenden Leitung (4) verbunden ist, wobei diese Vorrichtung ausserdem eine zweite manometrische Kapsel (20) aufweist, die stromabwärts der Drosselklappe (5) zur Steuerung der Gase mit der besagten diese Drosselklappe aufweisenden Leitung (4) verbunden ist und die mit der anderen beziehungsweise ersten Kapsel (8) parallel angeordnet ist, damit ihre Membran (24) auf das durch diese erste Kapsel (8) betätigte Gestänge (6) einwirkt, wobei die Kupplung des Gestänges (6) mit den Membranen (9, 24) der beiden Kapseln (8, 20) derart ist, dass die Klappe (2) offen ist, wenn die Kapseln untätig sind.

2. Vorrichtung nach Anspruch 1, dadurch gekennzeichnet, dass das vorgenannte Gestänge (6) an zwei Stangen (7, 26) angelenkt ist, welche jeweils zu den beiden manometrischen Kapseln (8, 20), deren Federn (10, 23) einander entgegengesetzt angeordnet sind, gehören.

3. Vorrichtung nach Anspruch 1 oder 2, dadurch gekennzeichnet, dass die zweite manometrische Kapsel (20) mit der den Verdichter (C) an die Ansaugseite des Motors anschliessenden Leitung (4) durch eine mit einem Rückschlagventil (27) und gegebenenfalls mit einer kalibrierten Entweichungsöffnung (28) versehene Leitung (21) verbunden ist.

## Claims

1. Device for optimizing the operation of a turbocompressor for supercharging a combustion engine, of the type comprising an exhaust gas turbine (1) the stator of which comprises at least one flap (2) for adjusting the intake flow rate of the exhaust gases into the turbine as a function of the rating of the engine, which flap (2) is operable by ring cage (6) controlled by the membrane (9) of a manometrical box (8) connected upstream of the gas control throttle (5) to a duct (4) comprising this throttle and connecting the compressor (C) to the suction side of the engine, this device further comprising a second manometrical box (20) which is connected downstream of the gas control throttle (5) to the said duct (4) comprising this throttle and which is mounted in parallel relationship with the other one or first box (8) in order that its membrane (24) acts upon the linkage (6) operated by this first box (8), the coupling of the linkage (6) to the membranes (9, 24) of both boxes (8, 20) being such that the flap (2) is open when the boxes are inoperative.

2. Device according to claim 1, characterized in that the aforesaid linkage (6) is pivotally connected to two rods (7, 26) belonging to both manometrical boxes (8, 20), respectively, the springs (10, 23) of which are arranged in opposition.

3. Device according to claim 1 or 2, characterized in that the second manometrical box (20) is connected to the duct (4) connecting the compressor (C) to the suction side of the engine through a duct (21) provided with a check valve (27) and possibly with a calibrated leak port (28).
